Europäisches Patentamt

European Patent Office

Office européen des brevets

(11) Publication number: **0 178 098**
**A1**

## (12) EUROPEAN PATENT APPLICATION

(21) Application number: 85306898.9

(22) Date of filing: 27.09.85

(51) Int. Cl.⁴: **B 23 K 3/00**

(30) Priority: 10.10.84 GB 8425591

(43) Date of publication of application: 16.04.86
Bulletin 86/16

(84) Designated Contracting States: CH DE FR GB LI

(71) Applicant: ADCOLA PRODUCTS LIMITED, Adcola House
Gauden Road, London SW4 6LH (GB)

(72) Inventor: Borley, Neil James, 261 Stafford Road,
Wallington Surrey (GB)

(74) Representative: Jennings, Guy Kenneth et al, GILL
JENNINGS & EVERY 53-64 Chancery Lane, London
WC2A 1HN (GB)

(54) Soldering tool.

(57) An electrical soldering tool has a suction tube (12) passing axially through the interior of the handle (1). The tube (12) is adjustable in an axial direction being held in position by a resilient retaining collet (10) to permit adjustment of the inlet (14) in relation to the tip of the bit (7). In the full line position (14) the inlet is immediately adjacent the bit (7), but when withdrawn to the dotted line position (14') the view of the bit (7) is improved when working in a bit-downward position. Intermediate positions are indicated by graduations (22) and the range of adjustability of the suction tube is preferably sufficient to allow complete withdrawal of the tube (12) from the handle (1) for cleaning purposes.

ADCOLA PRODUCTS LIMITED

- 1 -

SOLDERING TOOL

It has been recognised that the inhalation of fumes from soldering flux can be responsible for respiratory troubles such as occupational asthma and various precautions have been taken to remove such fumes. In the past, either large volumes of air have been removed by a fan operated system, or much smaller quantities of air have been removed by a suction inlet in the immediate vicinity of the soldering operation. Both of these types of system have their disadvantages (particularly the former where the withdrawal of large volumes of air reduced the overall working temperature of the area in question) and more recently there have been proposals to fit a suction tube along the length of an electrical soldering tool with the inlet situated immediately adjacent the bit of the tool and the outlet connected to a source of suction. Such an arrangement has the advantage that the inlet automatically moves with the tool itself and is therefore always situated at the location of the highest concentration of fumes, thus optimising the proportion of fumes removed in relation to the volume of air withdrawn.

In theory the inlet should be as close as possible to the tip of the bit, but in practice, this tends to obscure the view of the operator and can lead to inaccuracy, particularly when the tool is being used for very fine work.

The invention is based on the realisation that since the fumes rise, the closeness of the inlet to the tip of the bit is of less importance when the tool is being used with the bit downwardly than when the bit is directed upwardly.

Thus, according to the invention, the suction tube which passes axially through the interior of the handle of the tool is made adjustable in an axial direction so that when the bit is directed downwardly the inlet of the tube may be retracted slightly to improve the view of the bit. In this position, the fumes will rise past the inlet and will be drawn in with minimum loss of efficiency. On the other hand, when the bit is directed upwardly, the inlet can be adjusted to a position immediately adjacent the tip of the bit so that no fumes can escape. The soldering tool is used less frequently in this position and the obstruction of the operator's view is acceptable.

The bits used with a soldering tool may vary somewhat in length and the range of adjustability should be sufficient to allow the inlet to be correctly positioned in relation to the tip of the bit whatever the length of the latter.

A further problem is that the fumes removed from the soldering region at a high temperature inevitably tend to condense as they are cooled by passage along the tube, leading to a deposit of solid material from the fumes and the need for periodic cleaning of the tube. Preferably, therefore, the range of adjustability of the suction tube is made sufficient to allow the tube to be completely withdrawn from the handle of the tool so that, after dis-connection from the suction line, it can be replaced without difficulty by a clean tube and soldering can continue with a minimum of interruption. The contaminated tube can either be taken away for cleaning at some separate locality, or can be cleaned by the user of the tool at the completion of the soldering operation. This cleaning is preferably carried out by immersion in a bath of solvent so as to avoid the production of a dust cloud of fine condensed particles which is the equivalent of extremely concentrated fumes.

The removable tube may conveniently be retained lightly in position by a resilient retaining collet which may be mounted at the point where the tube emerges at the front of the handle. This collet may be made of thin slotted metal so that the individual fingers thus defined can be adjusted to vary the frictional grip. The tube also passes through an opening at the rear end of the handle and to prevent the tube being inserted too far, it may be formed with an enlargement which engages the edge of the opening to prevent over-insertion. To facilitate adjustment, the tube may be formed with graduations which can be brought into line with some fixed mark, e.g. the point where the tube emerges from the front of the handle.

The tube itself may be made of stainless steel to facilitate cleaning, and the suction line may be made of a resilient plastics material such as silicon rubber or PVC, so as to form a simple, pull-off connection with the end of the tube. The use of silicon rubber is preferred since this is more readily collapsible and thus facilitates the removal of any condensed fumes which may carry over from the tube itself. Squeezing of the suction line dislodges the condensed material in the form of flakes rather than dust, and these can then be disposed of without any respiratory hazard.

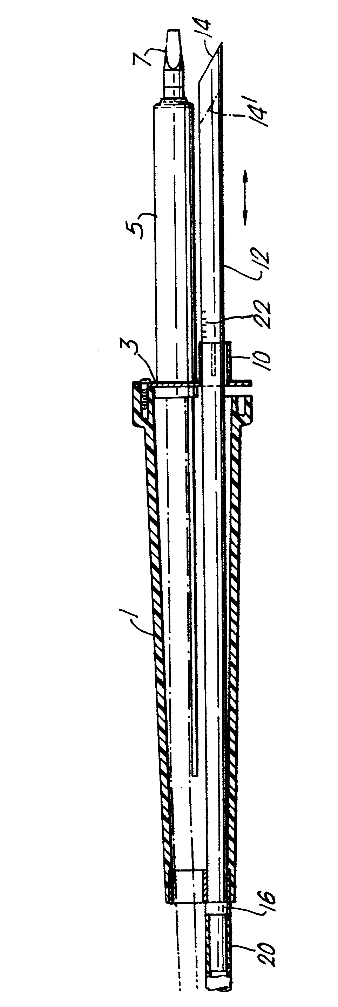

An example of soldering tool in accordance with the invention is illustrated in the accompanying drawing, which is a part-sectional elevation.

A handle 1 (shown in section) is formed as a hollow plastics moulding, the front end of which is closed by a metal plate 3 which supports a tube 5 enclosing a heating element in thermal contact with a soldering tip or bit 7. The plate 3 also supports a slotted metal collet 10, as previously described, which provides an adjustable friction grip on a stainless steel suction tube 12.

In the full line position illustrated, the inlet 14 of this tube is in the vicinity of the bit 7 and the main length of the tube extends through the body of the handle 1 and emerges at the rear where it is provided with an enlargement or collar 16 which engages the edge of an opening 18 to prevent over-insertion of the tube 12. A suction line 20 fits over the end of the tube 12 and extends as far as the collar 16, being easily pulled off to enable the tube 12 to be withdrawn for cleaning purposes.

In the illustrated position of the tube 12, the proximity of the inlet 14 to the bit 7 tends to obscure the view of the latter for the operator. It may be possible to turn the tool so that the bit can be viewed from the opposite side, but when this is not possible, and when working with the bit directed downwardly, the tube 12 can be retracted to bring the inlet 14 to the dotted line position 14', so that the bit 7 can be clearly seen. Since the fumes will rise from the bit 7, a large proportion will still be drawn into the inlet. On the other hand, when working with the bit 7 directed upwardly, it is preferable for the tube 12 to be adjusted with the inlet 14 as close as practically possible to the source of the fumes.

To assist in the adjustment, the tube 12 is formed with a row of graduations 22, any one of which can be brought into line with the edge of the collet 10. When the inlet is at its retracted position 14', the graduation at the right hand end of the row is in line with the end of the collet 10, and the intervening graduations define intermediate positions for the inlet. For cleaning purposes, the tube 12 is completely withdrawn and the suction line 20 pulled off, as previously described. A clean, replacement tube can then be inserted, so that soldering can continue without interruption, the contaminated tube being cleaned separately.

<u>C L A I M S</u>

1.    An electrical soldering tool having a suction tube passing axially through the interior of the handle with its inlet end in the vicinity of the tip of the bit characterised in that the tube is adjustable in an axial direction to permit adjustment of the inlet in relation to the tip of the bit.

2.    An electrical soldering tool according to claim 1 in which the range of adjustability of the suction tube is sufficient to allow complete withdrawal of the tube from the handle.

3.    An electrical soldering tool according to claim 1 or claim 2, in which the tube is held in position by a resilient retaining collet.

4.    An electrical soldering tool according to any one of the preceding claims, in which the tube is formed with graduations to facilitate accurate adjustment.

0178098

0178098

**EUROPEAN SEARCH REPORT**

Application number

| | DOCUMENTS CONSIDERED TO BE RELEVANT | | EP 85306898.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | <u>DE - A1 - 2 947 284</u> (JENSEN)<br>* Fig. 1 *<br>-- | 1-3 | B 23 K 3/00 |
| A | <u>EP - A1 - 0 100 229</u> (ADCOLA)<br>* Fig. 1 *<br>---- | | |

| | | | TECHNICAL FIELDS SEARCHED (Int. Cl.4) |
|---|---|---|---|
| | | | B 23 K 3/00<br>B 23 K 9/00 |

The present search report has been drawn up for all claims

| Place of search | Date of completion of the search | Examiner |
|---|---|---|
| VIENNA | 10-01-1986 | BENCZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82